# EUROPÄISCHE PATENTANMELDUNG

(11) **EP 1 541 886 A1**
(43) Veröffentlichungstag der Anmeldung: **15.06.2005**
(21) Anmeldenummer: 04021763.0
(22) Anmeldetag: 14.09.2004
(51) Int. Cl.: F16D 13/52, F16D 13/64, F16D 13/68

(54) **Verbindung von Scheiben mit einer Nabe, insbesondere in Kupplungen für Kraftfahrzeuge**

(30) Priorität: 13.12.2003 DE 10358390
(71) Anmelder: Dr.Ing. h.c.F. Porsche Aktiengesellschaft, 70435 Stuttgart (DE)
(72) Erfinder: Knoblauch, Richard, 71287 Weissach (DE)

(57) **Zusammenfassung**

In Ausgestaltung einer Verbindung von Keramikscheiben mit einer Nabe, insbesondere in Keramikkupplungen für Kraftfahrzeuge, welche Keramikkupplung (1) aus einer Anzahl in einem mit dem Schwungrad einer Brennkraftmaschine drehsicher verbundenen Käfig axial beweglich geführt an bogenförmigen Elementen abgestützten mit Reibbelägen ausgestatteten ersten Kupplungsscheiben (2) und einer Anzahl zwischen diese ersten Kupplungsscheiben eingreifender zweiter, aus einem Keramikmaterial bestehender Kupplungsscheiben (6), welche und vermittels einer mit einer radial ausladenden Koppelungsscheibe (7) ausgestatteten Nabe (8) aus Metall sowie an der Koppelungsscheibe (7) und an den zweiten Kupplungsscheiben (6) wechselseitig ausgebildeter erster und zweiter Eingriffsglieder (9,15) drehsicher mit einer Getriebeeingangswelle verbunden sowie zueinander beabstandet sind, wird zur Vergrößerung der gegenseitigen Anlageflächen der ersten und zweiten Eingriffsglieder (9,15) vorgeschlagen, dass die wechselweise an der Koppelungsscheibe und an den Kupplungsscheiben aus Keramikmaterial ausgebildeten ersten und zweiten Eingriffsglieder innerhalb einer sowohl zum Außenumfang des Nabenkörpers als auch zum Außenumfang der zweiten aus Keramikmaterial bestehenden Kupplungsscheiben beabstandeten Ringfläche angeordnet sind, wobei die zweiten durch hinsichtlich ihres Umfanges allseitig geschlossene Ausnehmungen gebildet sind.

## Beschreibung

Die Erfindung bezieht sich auf eine Verbindung von Scheiben mit einer Nabe, insbesondere in Kupplungen für Kraftfahrzeuge, gemäß dem Oberbegriff des Anspruches 1.

Aus der US-Re. 36,363 ist eine zum Einsatz in einem Kraftfahrzeug bestimmte Kupplung mit Kupplungsscheiben bekannt, welche insgesamt aus in einem drehsicher mit dem Schwungrad einer Brennkraftmaschine verbundenen Käfig aufgenommenen ersten und zweiten Kupplungsscheiben besteht und bei welcher die ersten Kupplungsscheiben parallel zur Kupplungsachse verschieblich an im Käfig enthaltenen Abstandböcken drehsicher abgestützt und die aus einem nicht metallischen Material - Carbon - bestehenden zweiten Kupplungsscheiben vermittels einer Nabe und einer Koppelungsscheibe drehsicher mit einer Getriebeeingangswelle verbunden sind. Zur drehsicheren Verbindung der zweiten Kupplungsscheiben mit der Koppelungsscheibe bzw., der Nabe ist die Koppelungsscheibe mit in axialer Richtung , erste Eingriffsglieder bildenden stegförmigen Vorsprüngen versehen, und es sind die zweiten Kupplungsscheiben mit zweite Eingriffsglieder bildenden, entsprechenden schlitzförmigen Ausnehmungen ausgestattet, wobei die die ersten Eingriffsglieder bildenden stegförmigen Vorsprünge an der Koppelungsscheibe radial zur Kupplungsachse ausgerichtet sternförmig angeordnet sind. Und die die zweiten Eingriffsglieder bildenden schlitzförmigen Ausnehmungen sind in den zweiten Kupplungsscheiben komplementär ausgebildet und angeordnet. Diese Bauart einer Kupplung ermöglicht zwar eine Sicherstellung eines vorgegebenen und bleibenden axialen Abstandes zwischen den beiden zweiten Kupplungsscheiben, ist dafür aber mit einer hohen Belastung der Ränder der offenen Enden der die zweiten Eingriffsglieder bildenden Ausnehmungen in den zweiten Kupplungsscheiben verbunden.

Aus der US-PS 5 284 232 ist ebenfalls eine zum Einsatz in einem Kraftfahrzeug bestimmte Kupplung mit Kupplungsscheiben bekannt, welche ebenfalls insgesamt aus in einem drehsicher mit dem Schwungrad einer Brennkraftmaschine verbundenen Käfig aufgenommenen ersten und zweiten Kupplungsscheiben besteht und bei welcher die zweiten Kupplungsscheiben vermittels einer Nabe und einer mit dieser verbundenen radial ausladenden Koppelungsscheibe drehsicher mit einer Getriebeeingangswelle verbunden sind. Die zweiten Kupplungsscheiben sind hierbei vermittels zur Kupplungsachse parallel ausgerichteter Ausnehmungen sowohl in der Koppelungsscheibe als auch in ihnen durchgreifender Bolzen drehsicher mit der Koppelungsscheibe bzw. der Nabe verbunden.

Der Erfindung liegt die Aufgabe zugrunde eine Verbindung von Keramikscheiben mit einer Nabe, insbesondere in Keramikkupplungen für Kraftfahrzeuge aufzuzeigen, welche unter Beibehaltung eines einfachen Zusammenbaues der Kupplung und einer Gewährleistung der Einhaltung eines axialen Abstandes der beiden zweiten Kupplungsscheiben zueinander eine Vergrößerung der gegenseitigen Eingriffsfläche der ersten und der zweiten Eingriffsglieder und zugleich auch eine Vermeidung örtlicher Höchstbelastungen vor allem der in den zweiten Kupplungsscheiben angeordneten zweiten Eingriffsglieder sicher stellt.

Diese Aufgabe wird erfindungsgemäß durch die im Anspruch 1 angegebenen Merkmale gelöst. Vorteilhafte Weiterbildungen und zweckmäßige Ausgestaltungen sind in den Unteransprüchen angegeben.

Ein wesentlicher Vorteil der erfindungsgemäßen Ausgestaltung der Verbindung der zweiten Kupplungsscheiben mit der drehsicher mit der Nabe verbundenen Koppelungsscheibe besteht darin, dass die Anordnung der ersten und zweiten Eingriffsglieder innerhalb einer zum Umfang des Nabenkörpers beabstandeten Ringfläche eine deutliche Vergrößerung der Anzahl der Eingriffsglieder und damit auch eine signifikante Vergrößerung der Gesamtheit der gegenseitigen Anlageflächen der Eingriffsglieder ermöglicht, wobei zusammen mit der Vergrößerung der gegenseitigen Anlageflächen auch die Größe der Flächenbelastung herabgesetzt wird.

Die hinsichtlich ihres Umfanges allseitig geschlossene Ausbildung der in den zweiten Kupplungsscheiben ausgebildeten zweiten Eingriffsglieder gewährleistet zudem die Vermeidung von Ecken oder Kanten an radialen Öffnungen der Eingriffsglieder, wodurch die Gefahr eines Ausbrechens von Material an solchen Stellen behoben ist.

Schließlich eröffnet die allseitig geschlossene Ausbildung der zweiten Eingriffsglieder darüber hinaus die Möglichkeit die ersten und die zweiten Eingriffsglieder in Umfangsrichtung kantenfrei zu gestalten, insbesondere als gerundete, beispielsweise zylinderförmige Elemente wie zylindrische Zapfen und zylindrische Bohrungsausnehmungen zu gestalten und in konzentrischen Reihen innerhalb der Ringfläche anzuordnen, wobei zweckmäßiger Weise die Eingriffsmittel benachbarter Reihen zueinander auf Lücke stehend angeordnet werden.

Die Erfindung wird in der nachfolgenden Beschreibung anhand zweier Ausführungsbeispiele näher erläutert.

Es zeigen
- Fig. 1: eine schaublidliche Darstellung von Teilkomponenten einer Kupplung,
- Fig. 2: eine schaubildliche Darstellung einer aus Nabenkörper und Koppelungsscheibe bestehenden, für eine erste Verwirklichungsform vorgesehene Einheit zur Verbindung zweiter Kupplungsscheiben mit einer Getriebeeingangswelle,
- Fig. 3: eine Stirnansicht zu Figur 2,
- Fig. 4: einen Schnitt durch die Einheit gemäß Fig. 2 entlang der Linie IV - IV in Fig. 2,
- Fig. 5: eine Stirnansicht einer zweiten Kupplungsscheibe;
- Fig. 6: einen Schnitt durch die Kupplungsscheibe gemäß Fig. 5 entlang der Linie VI - VI;
- Fig. 7: eine schaubildliche Darstellung einer Kupplung bei aufgesetzter zweiter Kupplungsscheibe,
- Fig. 8: eine gleichfalls schaubildliche Darstellung einer Kupplung bei abgenommener zweiter Kupplungsscheibe.

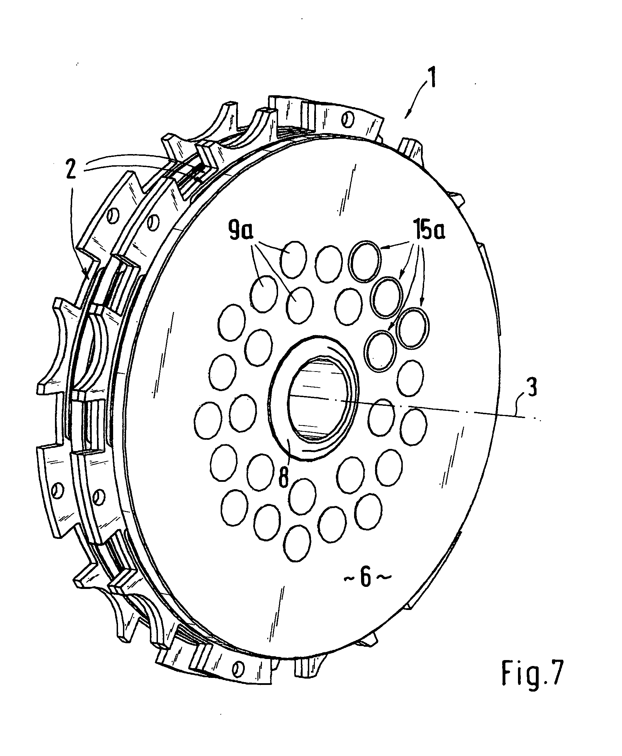

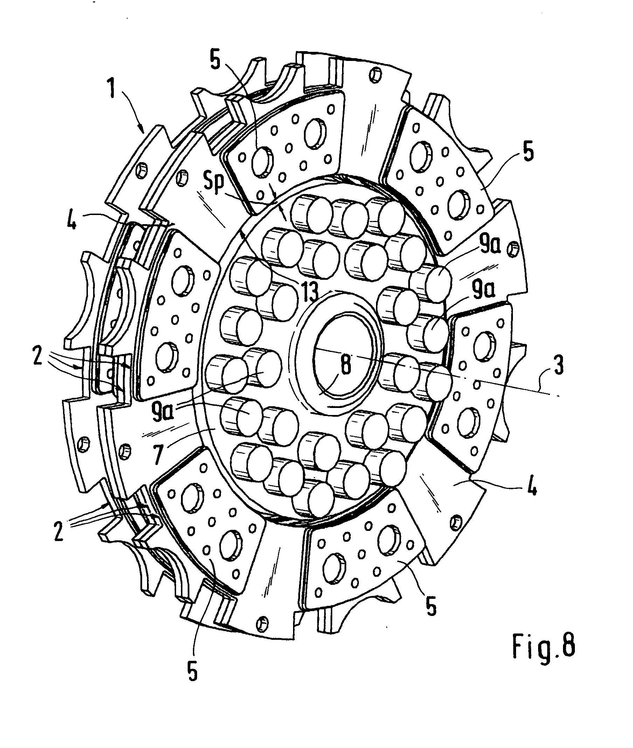

Wie dies am besten aus den Figuren 7 und 8 zu ersehen ist umfasst die aufgezeigte Kupplung 1 für Kraftfahrzeuge zwei erste Kupplungsscheiben 2, welche entlang einer zur Kupplungsachse 3 entfernt angeordneten Ringfläche 4 mit Reibbelägen 5 ausgestattet sind. Die beiden ersten Kupplungsscheiben 2 stehen vermittels eines nicht im Einzelnen dargestellten drehsicher mit einem gleichfalls nicht dargestellten Schwungrades einer Brennkraftmaschine verbundenen Käfigs axial verschieblich aber drehsicher mit dem Schwungrad der Brennkraftmaschine in Antriebsverbindung. Mit den Reibbelägen 5 der beiden ersten Kupplungsscheiben 2 arbeiten zwei zweite Kupplungsscheiben 6 zusammen, welche aus einem Keramikmaterial bestehen und vermittels einer aus einer Koppelungsscheibe 7 und einem Nabenkörper 8 bestehenden Einheit einerseits in einem definierten Abstand zueinander gehalten und andererseits drehsicher mit einer im Einzelnen nicht dargestellten Getriebeeingangswelle verbunden sind.

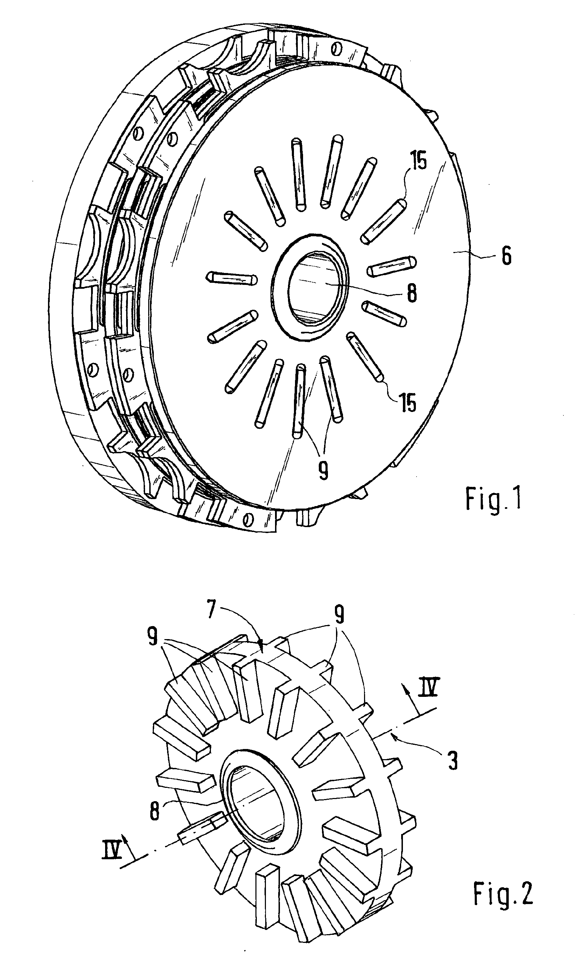

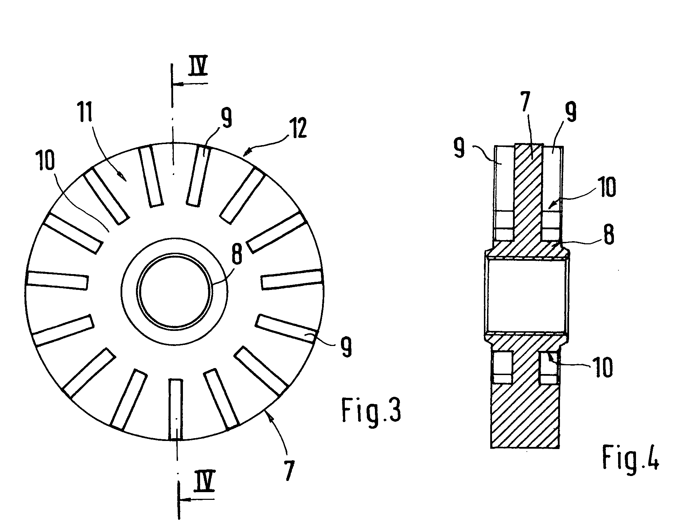

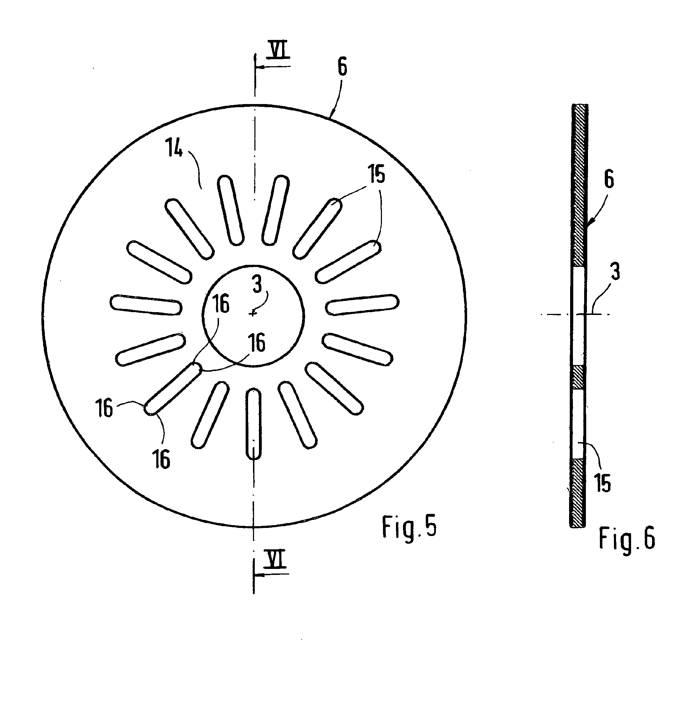

Bei der in den Figuren 2 bis 6 dargestellten Ausführungsform ist die Koppelungsscheibe 7 beidseitig mit einem Kranz in axialer Richtung vorspringender, radial zur Kupplungsachse 3 ausgerichteter und stegförmig ausgebildeter erster Eingriffsglieder 9 ausgestattet. Die mit der Koppelungsscheibe 7 einteilig ausgebildeten ersten Eingriffsglieder 9 weisen bei dieser Ausführungsform einen langgestreckten rechteckigen Grundriss auf und erstrecken sich von einer inneren Umfangsbegrenzung 10 einer Ringfläche 11 bis zum Außenumfang 12 der Koppelungsscheibe hin. Die Ringfläche 11 ist dabei einerseits durch eine mit einem Abstand zum Außenumfang 13 des Nabenkörpers 8 verlaufende zur Kupplungsachse 3 konzentrische innere Umfangsbegrenzung 10 und andererseits durch den Außenumfang 12 der Koppelungsscheibe 7 begrenzt, wobei der Außenumfang 12 der Koppelungsscheibe 7 unter Belassung eines Spieles Sp zu dem Innenumfang 13 der Reibbelägen 5 angeordnet ist. Die im montierten Zustand mit der Koppelungsscheibe 7 in Umfangsrichtung und in radialer Richtung formschlüssig gekoppelten zweiten, aus einem keramischen Material bestehenden Kupplungsscheiben 6 sind mit einem innerhalb einer zur Ringfläche 11 an der Koppelungsscheibe 7 deckungsgleichen Ringfläche 14 angeordneten Kranz zweiter Eingriffsglieder 15 ausgestattet. Die zweiten Eingriffsglieder 15 sind bezüglich der Materialdicke der zweiten Kupplungsscheiben 6 durchgehend ausgebildet weisen in zu Anordnung und Grundrissform der ersten Eingriffsglieder 9 komplementärer Anordnung und Ausbildung ebenfalls eine langgestreckte rechteckige Grundrissform auf. Die jeweils eine langgestreckt rechteckige Grundrissform aufweisenden ersten Eingriffsglieder 9 und zweiten Eingriffsglieder 15 sind bezüglich der Ecken der jeweils mit einer starken Abrundung 16 ausgestattet.

Bei der in den Figuren 7 und 8 dargestellten Ausführungsform sind an der Koppelungsscheibe 7 ausgebildete erste Eingriffsglieder 9a durch zylinderförmige Zapfen und zweite Eingriffsglieder 15a durch in den zweiten Kupplungsscheiben 6 ausgebildete zylindrische Ausnehmungen dargestellt. Dabei sind sowohl die ersten Eingriffsglieder 9a als auch die zweiten Eingriffsglieder 15a innerhalb einer einerseits durch eine zum Außenumfang des Nabenkörpers 8 beabstandeten Innenumfangslinie und andererseits durch den Außenumfang der Koppelungsscheibe 7 begrenzten Ringfläche 11 bzw. 14 angeordnet. Die ersten 9a und die zweiten Eingriffsglieder 15a sind in zwei zueinander und zur Kupplungsachse 3 konzentrischen Reihen angeordnet, wobei die ersten 9a und die zweiten Eingriffsglieder 15a zueinander auf Lücke stehend angeordnet sind.

## Patentansprüche

1. Verbindung von Scheiben mit einer Nabe, insbesondere in Kupplungen für Kraftfahrzeuge, welche Kupplung aus einer Anzahl in einem mit dem Schwungrad einer Brennkraftmaschine drehsicher verbundenen Käfig axial beweglich geführt an bolzenförmigen Elementen abgestützten sowie entlang einer zur Kupplungsachse beabstandeten Ringfläche mit Reibbelägen aus einem Reibmaterial ausgestatteten ersten Kupplungsscheiben und einer Anzahl zwischen diese ersten Kupplungsscheiben eingreifender zweiter Kupplungsscheiben, welche aus einem nicht metallischen Material bestehen und vermittels einer mit einer radial ausladenden Koppelungsscheibe ausgestatteten Nabe aus Metall drehsicher sowie zueinander beabstandet mit einer Getriebeeingangswelle verbunden sind, wobei die ebenfalls aus nicht metallischen Material bestehenden zweiten Kupplungsscheiben über an ihnen und an der Koppelungsscheibe ausgebildete, achsparallel zur Nabenachse ausgerichtete und wechselweise als Vorsprung oder Ausnehmung ausgebildete Eingriffsglieder mit der Nabe gekoppelt sind, **dadurch gekennzeichnet, dass** die wechselweise an der Koppelungsscheibe (7) und an den zweiten Kupplungsscheiben (6) aus Keramikmaterial ausgebildeten ersten und zweiten Eingriffsglieder (9,9a und 15,15a) innerhalb einer sowohl zum Außenumfang (13) des Nabenkörpers (8) als auch zum Außenumfang der zweiten aus Keramikmaterial bestehenden Kupplungsscheiben (7) beabstandeten Ringfläche (11) angeordnet sind, wobei die zweiten Eingriffsglieder (15, 15a) durch hinsichtlich ihres Umfanges allseitig geschlossene Ausnehmungen gebildet sind.

2. Verbindung nach Anspruch 1, **dadurch gekennzeichnet, dass** sich die mit dem Nabenkörper (8) verbundene Koppelungsscheibe (7) ausgehend vom Außenumfang (13) des Nabenkörpers (8) bis zum Innenumfang der der Anordnung der Reibbeläge (5) an den ersten (2) zugeordneten Ringfläche (4) hin erstreckt.

3. Verbindung nach Anspruch 1 und 2, **dadurch gekennzeichnet, dass** sich die der Anordnung der Eingriffsglieder (9,9a und 15,15a) zugeordnete Ringfläche (11) bis zum Außenumfang der Koppelungsscheibe (7) hin erstreckt.

4. Verbindung nach Anspruch 1 bis 3, **dadurch gekennzeichnet, dass** die an der Koppelungsscheibe (7) ausgebildeten ersten Eingriffsglieder (9) durch radial zur Kupplungsachse (7) ausgerichtete stegförmige Vorsprünge und die an den zweiten Kupplungsscheiben (6) ausgebildeten zweiten Eingriffsglieder (15) durch zu den stegförmigen ersten Eingriffsgliedern (9) komplementär ausgebildete und ausgerichtete schlitzförmige Ausnehmungen gebildet sind.

5. Verbindung nach Anspruch 1 bis 4, **dadurch gekennzeichnet, dass** die Steghöhe der ersten Eingriffsglieder (9) der Materialdicke der zweiten Kupplungsscheiben (6) entspricht und die schlitzförmigen zweiten Eingriffsglieder (15) in den Kupplungsscheiben (6) durch durchgehende Ausnehmungen gebildet sind.

6. Verbindung nach einem der voraufgehenden Ansprüche 1 bis 5, **dadurch gekennzeichnet, dass** sowohl die an der Koppelungsscheibe (6) ausgebildeten ersten (9a) als auch die an den zweiten Kupplungsscheiben (6) ausgebildeten zweiten Eingriffsglieder (15a) sowohl in Umfangsrichtung als auch in radialer Richtung frei von Kanten gestaltet sind.

7. Verbindung nach Anspruch 6, **dadurch gekennzeichnet, dass** die an der Koppelungsscheibe (7) angeordneten ersten Eingriffsglieder (9a) durch zylindrische Zapfen und die in den Kupplungsscheiben (6) angeordneten zweiten Eingriffsglieder (15a) durch komplementär gestaltete zylindrische Ausnehmungen gebildet sind.

8. Verbindung nach Anspruch 6 und 7, **dadurch gekennzeichnet, dass** bei zylindrischer Ausbildung der wechselseitig angeordneten ersten (9a) und zweiten Eingriffsglieder (15a) zueinander und zur Kupplungsachse (3) konzentrisch umlaufende Reihen erster (9a) und zweiter Eingriffsglieder (15a) vorgesehen sind.

9. Verbindung nach Anspruch 6 bis 8, **dadurch gekennzeichnet, dass** die zylindrisch ausgebildeten jeweils auf Lücke stehend angeordnet sind.

10. Verbindung nach Anspruch 6, **dadurch gekennzeichnet, dass** die an der Koppelungsscheibe (7) angeordneten ersten Eingriffsglieder (9a) durch von der reinen Zylinderform abweichend gestaltete kantenfreie Vorsprünge gebildet sind und insbesondere eine elypsenartige Querschnittsform aufweisen und dass die in den zweiten Kupplungsscheiben (6) vorgesehenen zweite Eingriffsglieder (15a) bildenden Ausnehmungen eine komplementäre Querschnittsform besitzen.

11. Verbindung nach einem der voraufgehenden Ansprüche 1 bis 10, **dadurch gekennzeichnet, dass** der Nabenkörper (8) und die Koppelungsscheibe (7) samt den ersten Eingriffsgliedern (9,9a) einteilig ausgebildet sind.
